# EUROPÄISCHE PATENTSCHRIFT

(11) **EP 0 968 248 B1**
(45) Veröffentlichungstag und Bekanntmachung des Hinweises auf die Patenterteilung: **09.05.2001**
(21) Anmeldenummer: 98912405.2
(22) Anmeldetag: 26.02.1998
(51) Int. Cl.: C08L 1/18, C09D 101/18

(54) **LACKBINDEMITTELZUBEREITUNGEN, DEREN HERSTELLUNG UND VERWENDUNG**
BONDING AGENT PREPARATIONS FOR PAINTS, THE PRODUCTION AND USE THEREOF
COMPOSITIONS DE LIANTS POUR PEINTURE, LEUR PRODUCTION ET LEUR UTILISATION

(30) Priorität: 10.03.1997 DE 19709702
(43) Veröffentlichungstag der Anmeldung: 05.01.2000
(73) Patentinhaber: Wolff Walsrode Aktiengesellschaft, D-29655 Walsrode (DE)
(72) Erfinder: HECHT, Reinhold, D-96352 Wilhelmsthal (DE); HOPPE, Lutz, D-29664 Walsrode (DE); LÜHMANN, Erhard, D-29699 Bomlitz (DE)
(74) Vertreter: Pettrich, Klaus-Günter, Dr.
(86) Internationale Anmeldenummer: EP9801095
(87) Internationale Veröffentlichungsnummer: WO9840433

(56) Entgegenhaltungen:
- DE-A- 2 215 624
- DE-A- 3 636 531
- US-A- 4 460 411
- CHEMICAL ABSTRACTS, vol. 79, no. 16, 22.Oktober 1973 Columbus, Ohio, US; abstract no. 93523, SUKHAREVA L.A. ET AL.: "Effect of the structure of polyurethane oligomers on the properties of nitrocellulose coatings" XP000207519 & VYSOKOMOL. SOEDIN., SER. A,, Bd. 15, Nr. 5, 1.Mai 1973, Seiten 1053-1056,

## Beschreibung

Die vorliegende Erfindung betrifft neue Cellulosenitrat-Weichmacher-Kombinationen, bestehend aus 82 - 40 Gew.-% Cellulosenitrat mit einem Stickstoffgehalt von weniger als 12,6 Gew.-% und 18 - 60 Gew.-% formylierter Polyurethane als Weichmacher.

Cellulosenitrat ist als wesentlicher Bestandteil vieler Lacksysteme bekannt (vergl. z. B. U. Biethan, Lacke und Lösemittel, Verlag Chemie GmbH, Weinheim, 1. Auflage, 1979, S. 8).

Da Cellulosenitrat in trockener Form sehr leicht durch Stoß oder Reibung zur Entzündung gebracht werden kann, müssen handelsübliche Lack-Cellulosenitrate entweder mit einem Phlegmatisierungsmittel (z. B. Anfeuchtungsmittel) in einer Menge von mindestens 25 Gew.-% oder einem gelatinierenden Weichmacher in einer Konzentration von mindestens 18 Gew.-% behandelt sein, um Gefahren bei Lagerung, Handhabung und Transport zu verringern.

Als Anfeuchtungsmittel werden neben Wasser im allgemeinen Alkohole wie Ethanol, Isopropanol und Butanol verwendet. Bei der Verarbeitung von cellulosenitrathaltigen Lacken stören Alkohole allerdings in den üblichen Adsorptionsanlagen, die zur Emissionsreduzierung den Lackieranlagen nachgeschaltet sind. Außerdem stören Alkohole beim Einsatz in PUR-Lacken. Sie reagieren mit Isocyanaten zu niedermolekularen Verbindungen, wodurch die Qualität des Lackfilms deutlich herabgesetzt wird.

In der DE-A 30 41 085 und in der US 3 284 253 werden Cellulosenitrate beschrieben, die als Anfeuchtungsmittel inerte Lösungsmittel (z. B. Toluol) enthalten. Die Herstellung erfolgt mittels eines destillativen Arbeitsschrittes, der außerordentlich aufwendig und sicherheitstechnisch problematisch ist.

Bei allen mit Anfeuchtungsmitteln versehenen Cellulosenitraten besteht weiterhin das Problem der Verdunstung des Anfeuchtungsmittels bzw. der inhomogenen Verteilung infolge Absackens bei der Lagerung im Faß.

Damit der Anwender frei ist in der Auswahl der einsetzbaren Lösungsmittel, wird Cellulosenitrat auch in plastifizierter Form (sog. NC-Chips) angeboten. Die Herstellung dieser NC-Chips wird allgemein durch Einarbeitung von Weichmachern in wasserfeuchte Cellulosenitrate erreicht. Die Herstellung wird z. B. in der DE 1 203 652, DE 1 570 121, DE 1 470 860 und DE 2 338 852 beschrieben.

Voraussetzungen zur Herstellung von NC-Chips sind gelatinierende Weichmacher in reiner Form bzw. solche Weichmacher, die durch einen Zusatz von Cellulosenitrat lösenden organischen Lösungsmitteln gelatinierende Eigenschaften erhalten. Diese organischen Lösungsmittel werden beim Trocknen wieder entfernt. Bei einem solchen Herstellprozeß sind daher umwelttechnologische Vorkehrungen notwendig, um eine Einhaltung der gesetzlich geforderten Emissionswerte und Explosionsgrenzen zu gewährleisten.

Neben dem Gelatinierungsvermögen der Weichmacher gegenüber dem Cellulosenitrat als Grundvoraussetzung zur Herstellung von NC-Chips werden vom Markt zusätzliche Weichmachereigenschaften wie lebensmittelrechtliche Unbedenklichkeit, Migrationsbeständigkeit sowie gute allgemeine mechanische und chemische Eigenschaften gefordert.

Es ist bekannt, daß Polyurethane eine Vielzahl der geforderten Eigenschaften erfüllen. Sie zeichnen sich z. B. durch gute Chemikalienbeständigkeit, Hitzebeständigkeit, Lichtechtheit (bei Polyurethanen auf Basis aliphatischer Isocyanate) und sehr gute mechanische Eigenschaften aus.

Die Herstellung von mit Polyurethanölen plastifizierten Cellulosenitraten wird in der DOS 2 215 624 beschrieben. Gemäß der Erfindung wird die wäßrige Suspension des Plastifizierungsmittels unter starkem Rühren mit der wäßrigen Suspension von Cellulosenitratfasern zusammengeführt. Das resultierende Produkt wird abfiltriert, abgequetscht, durch Kalandrieren geformt, getrocknet und zu Chips zerschnitten. Für die Herstellung der Suspension des Plastifizierungsmittels werden anionische und/oder nichtionische Emulgatoren eingesetzt, die nach dem Herstellprozeß in den NC-Chips verbleiben und die Chemikalienbeständigkeit und insbesondere die Wasserbeständigkeit daraus hergestellter Beschichtungen in unerwünschter Weise verschlechtern.

Um die beschriebenen Nachteile zu vermeiden, wäre es wünschenswert, solche NC-Chips durch direktes Aufbringen von Polyurethanweichmachern auf die NC-Faser herstellen zu können. Infolge des mangelnden Gelatinierungsvermögens bislang bekannter Polyurethanweichmacher bzw. Polyurethanöle war das bisher jedoch nicht möglich.

Das Ziel der vorliegenden Erfindung bestand darin, durch den Einsatz speziell modifizierter Polyurethanweichmacher ein direktes und somit wirtschaftliches Aufbringen auf die NC-Faser zu ermöglichen und zu einem homogenen und gleichmäßig durchgelatinierten Produkt zu gelangen, ohne auf zusätzliche Hilfen wie organische Lösungsmittel oder Emulgatoren zurückgreifen zu müssen.

Überraschenderweise wurde gefunden, daß durch den Einsatz von formylierten Polyurethanen das Gelatinierungsvermögen dieser polymeren Weichmacher gegenüber Nitrocellulose erhöht werden kann, so daß die oben gestellte Aufgabe erfüllt werden konnte.

Formylierte Polyurethane sind z. B. unter dem Handelsnamen Centroplast® erhältlich und zeichnen sich durch Lichtechtheit, Hitzebeständigkeit und Nichtverseifbarkeit aus. Ferner besitzen sie FDA und BGA-Zulassung. Die Molekulargewichte dieser Weichmacher liegen zwischen 900 und 2000 g/mol.

Zur Herstellung der erfindungsgemäßen Cellulosenitrat-Weichmacher-Gemische werden Cellulosenitrate mit einem Stickstoffgehalt von weniger als 12,6 Gew.-% eingesetzt. Besonders bevorzugt sind die handelsüblichen Cellulosenitrate unterschiedlicher Viskositätsstufen mit einem Stickstoffgehalt von 10,0 - 12,6 Gew.%.

Bevorzugte Cellulosenitrat-Weichmacher-Zubereitungen der erfindungsgemäßen Art sind solche, die aus 82 - 40 Gew.% Celluiosenitrat und 18 - 60 Gew.% polymerer Weichmacher auf Basis formylierter Polyurethane bestehen.

In den erfindungsgemäßen Cellulosenitrat-Weichmacher-Kombinationen besteht die Möglichkeit, das formylierte Polyurethan partiell durch andere, für Cellulosenitrat bekannte Weichmacher (vergl. z. B. A. Kraus, Handbuch der Nitrocelluloselacke, Teil 3: Weichmachungsmittel, Wilhelm Pansegrau Verlag, Berlin-Wilmersdorf, 1961) zu ersetzen. Geeignete andere Weichmacher sind u. a. Phthalate, wie z. B. Dibutylphthalat oder Dioctylphthalat, Zitronensäureester, wie z. B. Acetyltributylcitrat, Phosphorsäureester, wie z. B. 2-Ethylhexyl-diphenylphosphat, Adipate, wie z. B. Diisobutyladipat, Sebacate, wie z. B. Dibutylsebacat, epoxidierte oder ethoxylierte Ester von natürlichen Fettsäuren bzw. Triglyceriden, wie z. B. epoxidiertes Sojabohnenöl (ESO), oder ethoxyliertes Rizinusöl, Zuckerderivate, wie z. B. Saccharoseacetatisobutyrat (SAIB), Glycerinderivate, wie z. B. Glycerindi- oder triacetat.

Die Herstellung der erfindungsgemäßen Cellulosenitrat-Weichmacher-Kombinationen erfolgt durch direktes Aufbringen des Weichmachers auf das wasserfeuchte Cellulosenitrat in einem nicht verdichtend wirkenden Mischer, wie es in der DE 1 203 652 und den nachfolgenden Beispielen beschrieben wird.

Ein weiterer Gegenstand der Erfindung ist die Verwendung der neuen NC-Chips als Lackrohstoff zum Beschichten von beliebigen Substraten. Zur Anpassung an bestimmte Anforderungsprofile können die erfindungsgemäßen NC-Chips dabei mit weiteren Lackrohstoffen kombiniert werden. Beispielhaft zu nennen sind die Verwendung der erfindungsgemäßen Lackbindemittelzubereitungen in Holz-, Papier-, Leder-,
Textil- und Folienlacken sowie in Druckfarben.

Die Applikation der Lacke erfolgt nach den in der Lacktechnologie üblichen Methoden, wie z. B. Spritzen, Gießen, Tauchen oder Walzen.

Die nachfolgenden Beispiele sollen die Erfindung erläutern, ohne sie zu beschränken.

### Beispiele

### Beispiel 1

In einen horizontalen, zylindrischen Mischer von 3001 Nennvolumen, ausgestattet mit schnell laufendem Rührwerk und Zerstäubungsgerät, werden 62,55 kg eines wasserfeuchten Cellulosenitrats (Normtype A 30 gemäß DIN 53 179) mit einem Wassergehalt von 28,1 % lose eingefüllt, so daß der Füllgrad des Mischers etwa 85 % des Nennvolumens beträgt. Bei laufendem Rührwerk werden anschließend 9 kg von auf 60 °C erwärmten Centroplast® FU 112 (= polymerer Weichmacher auf Basis eines formylierten, aliphatischen Polyurethans der Firma Vianova Resins) über das Einsprühgerät im Verlauf von 10 Minuten auf das wasserfeuchte Cellulosenitrat aufgedüst. Bei diesem Prozeß verliert das Cellulosenitrat seine Faserstruktur und geht in ein rieselfähiges Granulat über, welches anschließend zu einem Vlies gewalzt wird. Das Vlies wird dann zu kleinen Plättchen (den sog. Chips) zerschnitten. Die Chips werden zum Schluß bis zu einem Wassergehalt von < 2 % getrocknet.

### Beispiel 2

Ein wie im Beispiel 1 beschriebener Mischer, der mit einem zusätzlichen Doppelmantel versehen ist, wird mit 48,1 kg eines wasserfeuchten Cellulosenitrats (Normtype E 24 gemäß DIN 53 179) mit einem Wassergehalt von 27,2 Gew.-% befüllt. Anschließend wird der Mischer mittels Dampf auf 100 °C aufgeheizt und dann 7,7 kg auf 60 °C erwärmtes Centroplast® FU 210 (= polymerer Weichmacher auf Basis eines formylierten, aliphatischen Polyurethans der Firma Vianova Resins) im Verlauf von 10 Minuten auf das wasserfeuchte Cellulosenitrat aufgedüst. Abschließend wird 5 Minuten nachgemischt und das granulatartige Produkt, wie unter Beispiel 1 beschrieben, weiter aufgearbeitet.

## Patentansprüche

1. Cellulosenitrat-Weichmacher-Kombinationen, bestehend aus 82 - 40 Gew.-% Cellulosenitrat mit einem Stickstoffgehalt von weniger als 12,6 Gew.-% und 18 - 60 Gew.-% formylierter Polyurethane als Weichmacher.

2. Cellulosenitrat-Weichmacher-Kombinationen gemäß Anspruch 1, dadurch gekennzeichnet, daß ein Teil der formylierten Polyurethane durch an sich bekannte Weichmacher ersetzt ist.

3. Verwendung der Cellulosenitrat-Weichmacher-Kombinationen gemäß einem der Ansprüche 1 oder 2 als Lackrohstoff.

## Claims

1. Cellulose nitrate/plasticizer combinations comprising 82 - 40 wt.% cellulose nitrate with a nitrogen content of less than 12.6 wt.% and 18 - 60 wt.% formylated polyurethanes as plasticizers.

2. Cellulose nitrate/plasticizer combinations according to claim 1, characterized in that a portion of the formylated polyurethanes is replaced by plasticizers which are known per se.

3. Use of the cellulose nitrate/plasticizer combinations according to one of claims 1 or 2 as a paint raw material.

## Revendications

1. Combinaisons nitrate de cellulose-plastifiant consistant en 82-40% en poids de nitrate de cellulose, avec une teneur en azote inférieure à 12,6% en poids, et 18-60% en poids de polyuréthanne formylé comme plastifiant.

2. Combinaisons nitrate de cellulose-plastifiant suivant la revendication 1, caractérisées en ce qu'une partie du polyuréthanne formylé est remplacée par un plastifiant connu en soi.

3. Utilisation des combinaisons nitrate de cellulose-plastifiant suivant la revendication 1 ou 2, comme matière première pour peinture, vernis et laque.
